# EUROPÄISCHE PATENTANMELDUNG

(11) **EP 2 737 834 A1**
(43) Veröffentlichungstag der Anmeldung: **04.06.2014**
(21) Anmeldenummer: 13194749.1
(22) Anmeldetag: 28.11.2013
(51) Int. Cl.: A47J 43/046

(54) **Elektrisches Gerät zum Behandeln eines flüssigen oder flüssigkeitsbasierten Nahrungsmittels, insbesondere zum Aufschäumen desselben**

(30) Priorität: 30.11.2012 DE 202012104659 U
(71) Anmelder: WIK Far East Ltd., North Point, Hong Kong (CN)
(72) Erfinder: Steckhan, Markus, 45481 Mülheim a. d. Ruhr (DE)
(74) Vertreter: Haverkamp, Jens

(57) **Zusammenfassung**

Ein elektrisches Gerät zum Behandeln eines flüssigen oder flüssigkeitsbasierten Nahrungsmittels umfasst einen Behälter zur Aufnahme der zu behandelnden Flüssigkeit und umfassend eine elektrische Rühreinrichtung, insbesondere zum Aufschäumen von Milch oder einer milchbasierten Flüssigkeit, mit einem im Bereich des Bodens 4 des Behälters 2 drehbar gelagerten Rührwerkzeug 12 und mit einem unterhalb des Bodens 4 des Behälters 2 angeordneten Aktor zum Antreiben des Rührwerkzeuges 12 in eine Drehbewegung. Der Aktor weist als Stator eine aus mehreren einzelnen Spulen S gebildete ringförmige elektrische Spulenanordnung 11 auf, welche Spulenanordnung 11 zum Erzeugen eines magnetischen Drehfeldes an eine Steuereinheit angeschlossen ist. Das Rührwerkzeug 12, mit zumindest einem Permanentmagneten 17 ausgerüstet, bildet einen Rotor in Bezug auf die Spulenanordnung 11. Der Rotor und der Stator sind derart zueinander angeordnet, dass ein durch den Aktor bereitgestelltes magnetisches Drehfeld zum Antreiben des Rührwerkzeuges 12 auf den zumindest einen Permanentmagneten 17 des Rührwerkzeuges 12 wirkt.

## Beschreibung

Die Erfindung betrifft ein elektrisches Gerät zum Behandeln eines flüssigen oder flüssigkeitsbasierten Nahrungsmittels, umfassend einen Behälter zur Aufnahme der zu behandelnden Flüssigkeit und umfassend eine elektrische Rühreinrichtung, insbesondere zum Aufschäumen von Milch oder einer milchbasierten Flüssigkeit, mit einem im Bereich des Bodens des Behälters drehbar gelagerten Rührwerkzeug und mit einem unterhalb des Bodens des Behälters angeordneten Aktor zum Antreiben des Rührwerkzeuges in eine Drehbewegung.

Derartige Geräte werden zum Aufschäumen von Milch oder einer milchbasierten Flüssigkeit eingesetzt, und zwar vornehmlich im Zusammenhang mit der Bereitung von Kaffeegetränken. Eine solche Rühreinrichtung umfasst einen Behälter zur Aufnahme der zu behandelnden Flüssigkeit. Typischerweise ist der Behälter mit einer elektrischen Heizung ausgerüstet, um in den Behälter eingebrachte Flüssigkeit erwärmen zu können. Zum Aufschäumen von in den Behälter eingebrachter Flüssigkeit dient ein im Bereich des Bodens des Behälters drehbar gelagertes Rührwerkzeug, das für die Zwecke einer Milchaufschäumung als Schaumschläger ausgeführt ist. Der Schaumschläger ist typischerweise aus einem spiralförmig gewundenen und zu einem Ring gehaltenen Drahtkörper gebildet. Gehalten wird der Schaumschläger an einem Tragekörper als Teil des Rührwerkzeuges. Zum Zwecke der Lagerung des Rührwerkzeuges im Bereich des Bodens des Behälters verfügt der Behälterboden über eine in das Behälterinnere ragende Ausprägung. Der Tragekörper umgreift die Ausprägung, die somit als Lager für das Rührwerkzeug dient. Das Rührwerkzeug kann werkzeuglos von seiner Lagerung abgenommen und umgekehrt auf diese aufgesetzt werden.

Unterhalb des Bodens des Behälters befindet sich ein Installationsraum, in dem die für einen Betrieb des Gerätes notwendigen elektrischen Komponenten angeordnet sind.

Zum Bewegen des Rührwerkzeuges dient ein Magnetantrieb. Zu diesem Zweck verfügt das Rührwerkzeug über zwei einander bezüglich der Drehachse desselben diametral gegenüberliegende Permanentmagnete. Als Aktor zum Bewegen des Rührwerkzeuges dient ein Elektromotor, der unterhalb des Bodens in dem Installationsraum angeordnet ist. Auf der Motorachse des Elektromotors sitzen zwei einander diametral gegenüberliegende Permanentmagnete, die innerhalb der als Hohlform ausgeführten Ausprägung des Bodens, auf der das Rührwerkzeug sitzt, drehbeweglich angeordnet sind. Diese auf der Motorachse des Elektromotors sitzenden Permanentmagnete wirken mit denjenigen des Rührwerkzeuges zusammen. Mithin sind die Permanentmagnete paarweise magnetisch gekoppelt. Die magnetische Kopplungsrichtung liegt in radialer Richtung. Da die auf der Achse des Elektromotors sitzenden Magnete die Antriebsmagnete sind, können die komplementären Magnete des Rührwerkzeuges als Slave-Magnete angesprochen werden. Ein Gerät mit einer solchen Rühreinrichtung ist aus US 7,669,517 B2 bekannt.

Auch wenn mit einer solchen Rühreinrichtung zufriedenstellende Rühr- und/oder Aufschäumergebnisse erzielt werden können, wäre es wünschenswert, wenn grundsätzlich nicht nur die Bauhöhe eines solches Gerätes hinsichtlich seines Installationsraumes verringert, sondern auch die Ansteuermöglichkeiten des Rührwerkzeuges verbessert werden könnten, wozu zur Optimierung von Aufschäumergebnissen auch eine bessere Kontrolle der Drehzahl des Rührwerkzeuges zu zählen ist.

Vor vorstehend umrissenem Hintergrund liegt der Erfindung die Aufgabe zugrunde, ein eingangs genanntes Gerät mit einem Behälter und einer elektrischen Rühreinrichtung dergestalt auszubilden, dass den vorstehenden Anforderungen zumindest teilweise Rechnung getragen wird.

Gelöst wird diese Aufgabe erfindungsgemäß durch ein eingangs genanntes, gattungsgemäßes Gerät, bei dem der Aktor als Stator eine aus mehreren einzelnen Spulen gebildete ringförmige elektrische Spulenanordnung aufweist, welche Spulenanordnung zum Erzeugen eines magnetischen Drehfeldes an eine Steuereinheit angeschlossen ist, dass das Rührwerkzeug mit zumindest einem Permanentmagneten ausgerüstet einen Rotor in Bezug auf die Spulenanordnung bildet und dass der Rotor und der Stator derart zueinander angeordnet sind, dass ein durch den Aktor bereitgestelltes magnetisches Drehfeld zum Antreiben des Rührwerkzeuges auf den zumindest einen Permanentmagneten des Rührwerkzeuges wirkt.

Die elektrische Rühreinrichtung dieses Gerätes weist als Aktor eine aus mehreren einzelnen Spulen gebildete, ringförmige Spulenanordnung auf. Die einzelnen Spulen der Spulenanordnung sind an eine Steuereinrichtung angeschlossen und zur Erzeugung eines magnetischen Drehfeldes von der Steuereinheit individuell ansteuerbar. Angesteuert werden die einzelnen Spulen der Spulenanordnung nacheinander, und zwar in Drehrichtung des gewünschten Magnetfeldes. Dabei kann durchaus vorgesehen sein, dass die einzelnen Spulen der Spulenanordnung ein- oder auch mehrphasig, beispielsweise zwei-, drei- oder auch vierphasig angesteuert sind. Die Spulenanordnung bzw. das durch diese bei einer Ansteuerung derselben erzeugte magnetische Drehfeld dient zum Antrieb des Rührwerkzeuges, und zwar, um dieses in eine Drehbewegung zu versetzen. Zu diesem Zweck verfügt das Rührwerkzeug über zumindest einen Permanentmagneten, auf den das durch die Spulenanordnung generierte magnetische Feld wirkt und entsprechend der vorgesehenen Drehrichtung und der vorgesehenen Rotationsgeschwindigkeit bewegt wird, wodurch das Rührwerkzeug angetrieben ist. Die Anzahl der dem Rührwerkzeug zugeordneten Permanentmagnete ist typischerweise um zumindest einen Zähler kleiner als die Anzahl der Spulen der Spulenanordnung. Insofern bildet die Spulenanordnung einen Stator und das Rührwerkzeug mit seinem zumindest einen Permanentmagneten einen Rotor eines bürstenlosen Gleichstrommotors. Von Besonderheit bei diesem Konzept ist, dass im Gegensatz zu vorbekannten Geräten der in Rede stehenden Art die Spulenanordnung unmittelbar auf den Rotor ohne Zwischenschaltung von zusätzlichen Kopplungsmagneten wirkt. Da bei dem beanspruchten Konzept unterhalb des Bodens lediglich eine Spulenanordnung anzuordnen ist, ohne dass unterhalb des Bodens für die Zwecke des Antriebes des Rührwerkzeuges eine drehbar gelagerte Achse mit darauf befindlichen Permanentmagneten vorgesehen sein muss, ist der hierfür benötigte Bauraum vor allem in der Höhe auf die notwendige Höhe der Spule reduziert. Typischerweise verfügt der Boden über eine in das Behälterinnere gerichtete Ausprägung, an bzw. auf der das Rührwerkzeug gelagert ist. Diese Ausprägung ist als Hohlkörper ausgeführt. In einem Ausführungsbeispiel wird dieser Hohlraum genutzt, um darin die Spulenanordnung zu platzieren. Bei einer solchen Ausgestaltung wird von der Spulenanordnung in vertikaler Richtung keinerlei zusätzlicher Bauraum benötigt; vielmehr ist diese in dem ohnehin für die Lagerung des Rührwerkzeuges vorgesehen Bauteil angeordnet. Von entsprechend geringer Bauhöhe kann sodann der Installationsraum des Gerätes ausgeführt sein.

Von besonderem Vorteil bei diesem Gerät ist die Möglichkeit der Ansteuerung des Rührwerkzeuges. Zur Ansteuerung des Rührwerkzeuges können sämtliche, sich aus den Vorteilen eines bürstenlosen Gleichstrommotors ergebenden Vorteile genutzt werden. Dieses beinhaltet eine quasi spontane Drehrichtungsumsteuerung sowie eine sehr genaue Drehzahlregelung durch eine mit einfachen Mitteln realisierbare Drehzahlüberwachung. Eine Drehrichtungsumsteuerung kann beispielsweise genutzt werden, um eine bessere Durchmischung in der in dem Behälter befindlichen Flüssigkeit zu erzielen. Zudem kann zum Aufschäumen einer Flüssigkeit durch oftmaliges Anfahren des Rührwerkzeuges, auch in unterschiedlichen Drehrichtungen, besonders viel Luft in die Flüssigkeit zur Ausbildung der gewünschten Luftbläschen eingebracht werden. Wenn eine Flüssigkeit in dem Behälter des Gerätes aufgeschäumt werden soll, kann die sehr präzise Drehgeschwindigkeitsansteuerung und -kontrolle eine Verbesserung der Qualität der aufgeschäumten Flüssigkeit begründen. Die Qualität der Aufschäumung ist jedenfalls bei Milch oder milchbasierten Nahrungsmitteln abhängig von der Drehzahl des Rührwerkzeuges. Zum Zwecke des Aufschäumens ist das Rührwerkzeug mit einem Schaumschläger ausgerüstet, typischerweise bereitgestellt durch einen spiralförmig geformten und zu einem ringförmigen Torso gehaltenen Aufschäumkörper.

Wenn die Spulenanordnung innerhalb der das Rührwerkzeug tragenden Ausprägung angeordnet ist, wird man die einzelnen Spulen der Spulenanordnung mit ihrer magnetischen Achse in radialer Richtung ausrichten. Dann weist von jeder Spule ein Pol in radialer Richtung nach außen. Die zweckmäßigerweise mehreren Permanentmagnete des Rührwerkzeuges sind als Slave-Magnete ebenfalls mit einheitlichem Winkelabstand zur Ausbildung einer Ringform angeordnet. Typischerweise sind die Permanentmagnete des Rührwerkzeuges in diesem gekapselt aufgenommen, beispielsweise von einem Kunststofftragekörper umspritzt. Bei einer anderen Konzeption ist vorgesehen, dass die einzelnen Spulen der Spulenanordnung mit ihrer magnetischen Achse parallel zueinander ausgerichtet sind. Bei dieser Ausgestaltung kann die Spulenanordnung auch außerhalb der das Rührwerkzeug tragenden bzw. führenden Ausprägung unterhalb des Bodens angeordnet sein. Bei einer solchen Ausgestaltung kann die Ausprägung kleiner ausfallen und braucht nicht ringzylindrisch konzipiert zu sein. Vielmehr können bei einer solchen Ausgestaltung auch domförmige Tragestrukturen realisiert werden. Bei dieser Ausgestaltung ist es nicht erforderlich, dass die typischerweise ebenfalls als Hohlform ausgebildete Ausprägung von der Unterseite des Bodens her zugänglich ist. Der Durchmesser der Spulenanordnung bei einer solchen Ausgestaltung ist naturgemäß größer als der Durchmesser der Spulenanordnung, wenn diese in die Ausprägung einpasst. Eine magnetische Kopplung mit dem bzw. den Permanentmagneten des Rührwerkzeuges erfolgt sodann in vertikaler Richtung des Behälters. Aufgrund des größeren Durchmessers der Spulenanordnung lässt sich bei einer solchen Ausgestaltung ein größeres Drehmoment auf das Rührwerkzeug übertragen.

Das Rührwerkzeug kann an der bereits vorbeschriebenen bodenseitigen Ausprägung gelagert sein. Diese Ausprägung kann unmittelbar durch einen Umformvorgang des Bodens selbst, beispielsweise einen Tiefziehvorgang ausgebildet werden. Möglich ist es auch, innerhalb des Bodens des Behälters ein entsprechend dimensioniertes Loch vorzusehen, auf welches sodann ein eine Ausprägung bildendes Bauteil aufgesetzt ist. Möglich ist es auch, dass zur eigentlichen Lagerung auf die Oberseite einer solchen Aufprägung ein Lagerstift aufgesetzt ist, auf dem das Rührwerkzeug mit einer Lagerbuchse gelagert ist. Bei einer solchen Ausgestaltung kann die im Durchmesser größere Ausprägung eine Führungsfunktion einnehmen, nicht jedoch die eigentliche Lagerfunktion. Eine solche Lagerung hat nur einen sehr geringen Reibwiderstand, wodurch die Energieeffizienz der elektrischen Rühreinrichtung gesteigert werden kann.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig.1:**: eine schematisierte Längsschnittdarstellung eines elektrischen Gerätes umfassend einen Behälter mit einer elektrischen Rühreinrichtung,
- **Fig. 1a:**: eine schematisierte Schnittdarstellung durch ein Rührwerkzeug,
- **Fig. 2:**: einen vergrößerten Ausschnitt aus dem Bereich des Bodens des Behälters des Gerätes der Figur 1 mit einem darauf aufgesetzten Rührwerkzeug und
- **Fig. 3a - 3c:**: schematisierte Querschnittsdarstellungen durch die Rühreinrichtung der Figur 2 in unterschiedlichen Stellungen des Rotors gegenüber dem Stator.

Ein elektrisches Gerät 1, ausgebildet zum Aufschäumen einer Flüssigkeit, insbesondere von Milch oder einer milchbasierten Flüssigkeit umfasst einen Behälter 2. Bei dem dargestellten Ausführungsbeispiel handelt es sich bei dem Behälter 2 um ein tiefgezogenes Stahlblechbauteil. Der Behälter 2 verfügt über eine umlaufende Wand 3 und einen Boden 4. Der Boden 4 trennt den Innenraum 5 des Behälters 2, in den die aufzuschäumende Flüssigkeit eingebracht wird, von einem unterhalb des Bodens 4 befindlichen Installationsraum 6. In dem Installationsraum 6 sind in nicht näher dargestellter Art und Weise die für einen Betrieb des Gerätes 1 benötigten elektrischen Komponenten enthalten, wie beispielsweise ein Transformator, ein oder mehrere Steuereinrichtungen, eine auf den Boden 4 wirkende Heizeinrichtung etc.

Der Boden 4 verfügt über eine in den Innenraum 5 des Behälters 2 gerichtete Ausprägung 7. Die Ausprägung 7 ist ringzylindrisch ausgeführt und schließt einen von der Seite des Installationsraumes 6 zugänglichen Hohlraum 8 ein. Auf der Oberseite 9 der Ausprägung 7 ist ein Lagerstift 10 angebracht.

Die für den Betrieb des Gerätes 1 benötigten elektrischen/elektronischen Komponenten sind ebenso wie ein elektrisches Anschlusskabel in der Figur, soweit nicht für die Beschreibung der Erfindung von Bedeutung, nicht dargestellt.

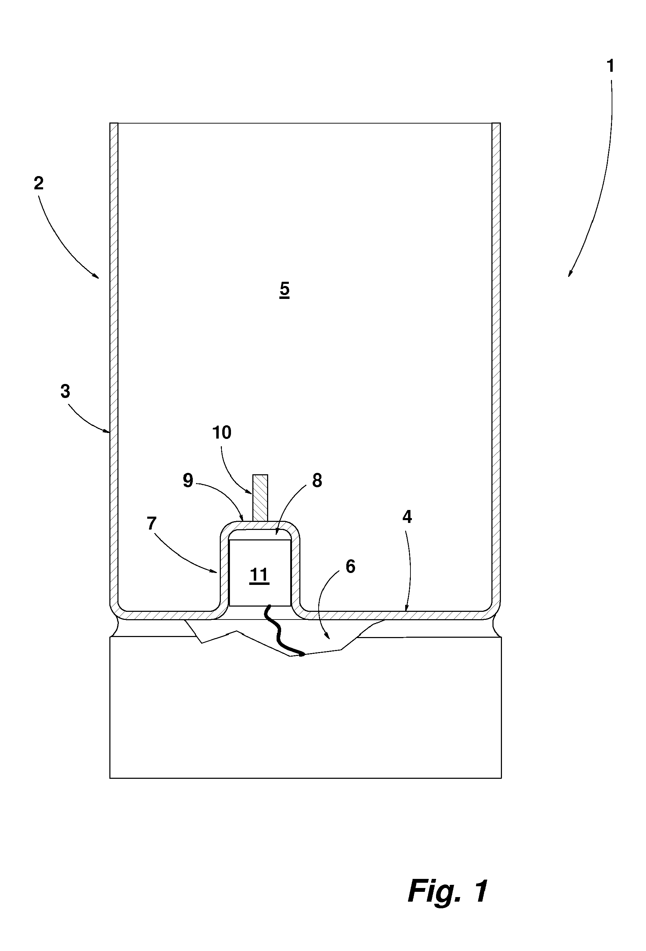

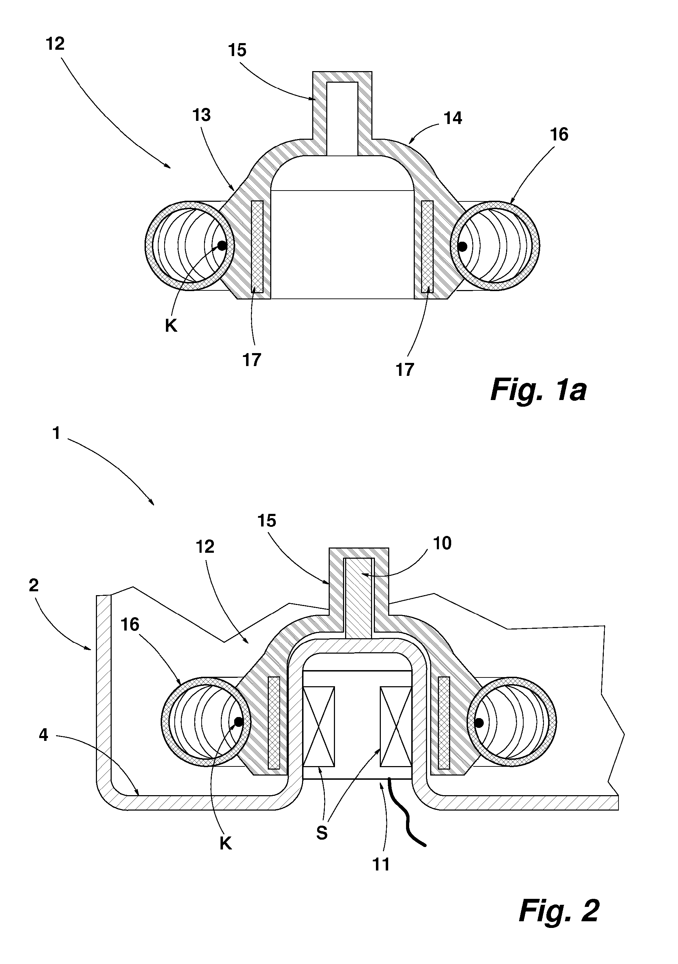

Eingesetzt in den Hohlraum 8 der Ausprägung 7 des Bodens 4 ist eine Spulenanordnung 11. Die Spulenanordnung 11 ist aus mehreren einzelnen Spulen S aufgebaut, deren magnetische Achse in radialer Richtung nach außen weist. Bei dem dargestellten Ausführungsbeispiel weist die Spulenanordnung 11 neun Spulen S auf. Die einzelnen Spulen S der Spulenanordnung 11 sind in nicht näher dargestellter Weise an eine Steuereinheit angeschlossen, durch die die einzelnen Spulen S ein- oder mehrphasig zum Erzeugen eines sich um die Achse der Spulenanordnung 11 drehenden Magnetfeldes angesteuert werden können. Insofern bildet die Spulenanordnung 11 den Stator eines bürstenlosen Gleichstrommotors. Die Spulenanordnung 11 bildet zugleich den Aktor, um ein auf die Ausprägung 7 mit ihrem Lagerstift 10 aufgesetztes Rührwerkzeug 12 (siehe Figur 1a) anzutreiben.

Das Rührwerkzeug 12 umfasst einen ringförmigen Tragekörper 13, an den ein Deckelfortsatz 14 mit einer Lagerhülse 15 angeformt ist. Die Lagerhülse 15 dient zum Aufsetzen auf den Lagerstift 10. Der Innendurchmesser des Tragekörpers 13 ist um das notwendige Bewegungsspiel größer als der Außendurchmesser der ringzylindrischen Ausprägung 7. Dieser Teil des Tragekörpers 13 trägt außenseitig als eigentlichen Rührkörper einen Schaumschläger 16. Bei dem dargestellten Ausführungsbeispiel ist der Schaumschläger 16 durch einen spiralförmig gewundenen und zu einem ringförmigen Körper gehaltenen Draht gebildet. Gehalten wird die Ringform der Spirale durch einen nach Art eines Sprengringes konzipierten Klemmring K. Der Tragekörper 13 verfügt über mehrere, bei dem dargestellten Ausführungsbeispiel acht Permanentmagnete 17, die mit einheitlichem Winkelabstand voneinander innerhalb des Tragekörpers 13 angeordnet sind. Diese Permanentmagnete 17 weisen eine Längserstreckung auf, die parallel zur äußeren Mantelfläche der Ausprägung 7 verläuft. Die Permanentmagnete 17 sind innerhalb des Tragekörpers 13 gekapselt. Der Tragekörper 13 selbst ist ein Kunststoffspritzgussteil. In einer anderen Ausgestaltung verfügt der Tragekörper über Magnetaufnahmen, in die die Permanentmagnete im Anschluss an den Herstellungsprozess des Tragekörpers eingesetzt werden.

Figur 2 zeigt in einer vergrößerten Darstellung den Bereich der Ausprägung 7 des Bodens 4 des Behälters 2 mit dem darauf aufgesetzten Rührwerkzeug 12. Die Lagerung des Rührwerkzeuges 12 mit seiner Lagerhülse 15 auf dem Lagerstift 10 ist daraus deutlich erkennbar. Erkennbar ist des Weiteren, dass sich das Rührwerkzeug 12 nur mit dem Boden seiner Lagerhülse 15 auf der Oberseite des Lagerstiftes 10 abstützt.

Bei einer Ansteuerung der Spulenanordnung 11 zum Generieren eines magnetischen Drehfeldes wird das Rührwerkzeug 12 aufgrund entsprechender Anordnung der Permanentmagnete 17 in Rotation versetzt. Damit bildet das Rührwerkzeug 12 den Rotor zu dem durch die Spulenanordnung 11 gebildeten Stator. Beide Bauteile bilden zusammen einen bürstenlosen Gleichstrommotor. Bei einem Antrieb des Rührwerkzeuges 12 wird durch die Steuereinheit entsprechend der angesteuerten Spulen S der Spulenanordnung 11 die durch die Spulen S generierte Magnetkraft unmittelbar auf die Permanentmagnete 17 des Rührwerkzeuges 12 übertragen. Mithin ist eine unmittelbare Kopplung zwischen der das magnetische Drehfeld erzeugenden Spulenanordnung 11 und den hierdurch angetriebenen Permanentmagneten 17 des Rührwerkzeugs 12 gegeben. Dabei ist das von den Spulen S erzeugte Magnetfeld bei dem dargestellten Ausführungsbeispiel ausgerichtet, damit die magnetische Achse der einzelnen Spulen S in radialer Richtung verläuft. Mithin ist bei dieser Ausgestaltung vorgesehen, dass jeweils eine Polfläche einer Spule S in radialer Richtung nach außen und somit zu der Anordnung der Permanentmagnete weist.

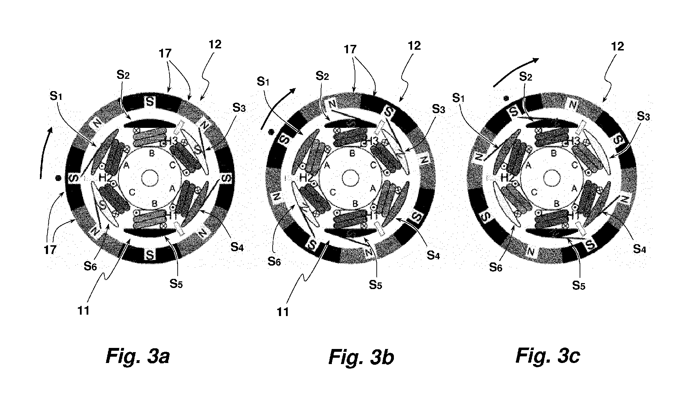

Die Figurenfolge 3a bis 3c zeigt einen schematisierten Querschnitt durch die Rühreinrichtung des Gerätes 1 zum Darstellen des Antriebes seines Rührwerkzeuges 12 durch die wechselnde Ansteuerung der Spule S der Spulenanordnung 11. Die in Figur 3a gezeigte Spulenanordnung verfügt über sechs einzelne Spulen S₁ - S₆, deren magnetische Achsen in radialer Richtung ausgerichtet sind. Dies bedeutet, dass jeweils ein Pol einer Spule S₁ - S₆ in radialer Richtung nach außen in Richtung zu den in dem Rührwerkzeug 12 enthaltenen Permanentmagneten 17 weist. Der Einfachheit halber sind die Permanentmagnete 17 in dieser Figurenfolge als Ringmagnet mit wechselnder Polarität gezeigt. Der Einfachheit halber ist auch die durch die Ausprägung 7 gebildete Wand zwischen den Spulen S₁ - S₆ und dem Rührwerkzeug 12, das mit Ausnahme seiner schematisiert gezeigten Permanentmagnete 17 nicht weiter dargestellt ist, nicht gezeigt.

Zum Antrieb des Rührwerkzeuges 12 wird durch die Spulenanordnung 11 ein magnetisches Drehfeld erzeugt. Figur 3a zeigt diesbezüglich eine erste Ansteuerungssituation. In dieser sind die Spulen S₁, S₃, S₄ und S₆ bestromt. Die Spulen S₂ und S₅ sind inaktiv. Bei der Bestromung dieser Spulen S₁, S₃, S₄, S₆ ist vorgesehen, dass die Spulen S₁ und S₄ beaufschlagt sind, um an ihrem in radialer Richtung nach außen weisenden Pol den N-Pol zu bilden. Die Spulen S₃ und S₆ sind gegenpolig angesteuert. Somit bilden diese in der in Figur 3a gezeigten Ansteuersituation in radialer Richtung nach außen weisend einen S-Pol aus. Aufgrund der dadurch entstehenden magnetischen Kräfte - gegenpolige Pole wirken anziehend aufeinander; gleichpolige Pole wirken abstoßend - beginnt das Rührwerkzeug 12 sich im Uhrzeigersinn (rechtsdrehend) zu bewegen. Um die Bewegung des Rührwerkzeuges 12 kenntlich zu machen, ist an den in Figur 3a linken Permanentmagneten 17 eine Markierung (Punkt) angebracht.

Die Bestromung der Spulen S₁, S₃, S₄ und S₆ bleibt für eine kurze Zeit aufrechterhalten, bevor zum Erzeugen des magnetischen Drehfeldes die Spulen S₂, S₃, S₅ und S₆ bestromt werden. Bei den Spulen S₃ und S₆ wurde die Polarität geändert. Zum Ändern der Situation zwischen derjenigen der Figur 3a und derjenigen der Figur 3b werden zusätzlich die Spulen S₁ und S₄ ausgeschaltet und die Spulen S₂ und S₅ eingeschaltet, welche neu eingeschalteten Spulen S₂, S₅ angesteuert sind, um wiederum ihren in radialer Richtung nach außen weisenden Pol einen N-Pol auszubilden. Das Rührwerkzeug 12 ist aufgrund der geänderten Spulenansteuerung weiterhin bestrebt, sich rechtsdrehend zu bewegen.

Figur 3c zeigt die nächste Ansteuersituation der Spulen S₁ - S₆ der Spulenanordnung 11. Gegenüber der Ansteuersituation in Figur 3b sind in dem folgenden Ansteuerschritt die Spulen S₂ und S₅ umgepolt, die Spulen S₃ und S₆ ausgeschaltet und die Spulen S₁ und S₄ aktiviert, und zwar dergestalt, dass deren in radialer Richtung nach außen weisende Polfläche jeweils einen S-Pol bildet. In der Folge wiederholen sich die in den Figuren 3a bis 3c schematisiert dargestellten Ansteuerschritte. Über die Frequenz der Spulenansteuerung ist die Drehgeschwindigkeit des Rührwerkzeuges 12 einstellbar.

### Bezugszeichenliste

- 1: Gerät
- 2: Behälter
- 3: Wand
- 4: Boden
- 5: Innenraum
- 6: Installationsraum
- 7: Ausprägung
- 8: Hohlraum
- 9: Oberseite
- 10: Lagerstift
- 11: Spulenanordnung
- 12: Rührwerkzeug
- 13: Tragekörper
- 14: Deckelfortsatz
- 15: Lagerhülse
- 16: Schaumschläger
- 17: Permanentmagnet

- K: Klemmring
- S, S₁ - S₆: Spule

## Patentansprüche

1. Elektrisches Gerät zum Behandeln eines flüssigen oder flüssigkeitsbasierten Nahrungsmittels, umfassend einen Behälter zur Aufnahme der zu behandelnden Flüssigkeit und umfassend eine elektrische Rühreinrichtung, insbesondere zum Aufschäumen von Milch oder einer milchbasierten Flüssigkeit, mit einem im Bereich des Bodens (4) des Behälters (2) drehbar gelagerten Rührwerkzeug (12) und mit einem unterhalb des Bodens (4) des Behälters (2) angeordneten Aktor zum Antreiben des Rührwerkzeuges (12) in eine Drehbewegung, **dadurch gekennzeichnet, dass** der Aktor als Stator eine aus mehreren einzelnen Spulen (S) gebildete ringförmige elektrische Spulenanordnung (11) aufweist, welche Spulenanordnung (11) zum Erzeugen eines magnetischen Drehfeldes an eine Steuereinheit angeschlossen ist, dass das Rührwerkzeug (12), mit zumindest einem Permanentmagneten (17) ausgerüstet, einen Rotor in Bezug auf die Spulenanordnung (11) bildet und dass der Rotor und der Stator derart zueinander angeordnet sind, dass ein durch den Aktor bereitgestelltes magnetisches Drehfeld zum Antreiben des Rührwerkzeuges (12) auf den zumindest einen Permanentmagneten (17) des Rührwerkzeuges (12) wirkt.

2. Gerät nach Anspruch 1, **dadurch gekennzeichnet, dass** die Spulenanordnung (11) drei- oder mehrphasig ausgelegt ist.

3. Gerät nach Anspruch 1 oder 2, **dadurch gekennzeichnet, dass** das Rührwerkzeug (12) mehrere, mit gleichem oder annähernd gleichem Winkelabstand zueinander zu einer Ringstruktur angeordnete Permanentmagnete (17) trägt.

4. Gerät nach einem der Ansprüche 1 bis 3, **dadurch gekennzeichnet, dass** das Rührwerkzeug (12) auf eine in das Behälterinnere (5) hineinragende, als Hohlform ausgeführte Ausprägung (7) aufsetzbar ist.

5. Gerät nach Anspruch 4, **dadurch gekennzeichnet, dass** die Ausprägung ringzylindrisch ausgeführt ist.

6. Gerät nach einem der Ansprüche 1 bis 5, **dadurch gekennzeichnet, dass** die einzelnen Spulen der Spulenanordnung (11) mit ihrer magnetischen Achse in radialer Richtung ausgerichtet sind.

7. Gerät nach Anspruch 4, 5 und 6, **dadurch gekennzeichnet, dass** die Spulenanordnung (11) innerhalb der Ausprägung (7) oder zumindest in die Ausprägung (7) eingreifend angeordnet ist.

8. Gerät nach einem der Ansprüche 1 bis 6, **dadurch gekennzeichnet, dass** die einzelnen Spulen der Spulenanordnung (11) mit ihrer magnetischen Achse parallel zueinander und parallel oder etwa parallel zur Längsachse des Behälters ausgerichtet sind.

9. Gerät nach Anspruch 4 oder 5, **dadurch gekennzeichnet, dass** die Ausprägung (7) oberseitig einen Lagerstift (10) trägt und das Rührwerkzeug (12) eine zum Aufsetzen auf den Lagerstift (10) ausgeführte Lagerbuchse (15) aufweist, mit der das Rührwerkzeug (12), wenn auf den Lagerstift (10) aufgesetzt, drehbeweglich gelagert ist.

10. Gerät nach einem der Ansprüche 1 bis 9, **dadurch gekennzeichnet, dass** das Rührwerkzeug (12) aus seiner Lagerung im Bereich des Bodens (4) des Behälters (2) entfernt und umgekehrt in seine Benutzungsstellung werkzeuglos gebracht werden kann.

11. Gerät nach einem der Ansprüche 1 bis 10, **dadurch gekennzeichnet, dass** das Rührwerkzeug (12) einen Tragekörper (13) aufweist, in oder an dem der oder die Permanentmagnete (17) gehalten sind, und der einen spiralförmig geformten und von einem den Tragekörper (13) zumindest weitestgehend umfassenden Ring (K) gehaltenen Aufschäumkörper (16) trägt.
